(19) Europäisches Patentamt
European Patent Office
Office européen des brevets

(11) **EP 2 669 834 A1**

(12) **EUROPEAN PATENT APPLICATION**
published in accordance with Art. 153(4) EPC

(43) Date of publication:
**04.12.2013 Bulletin 2013/49**

(21) Application number: **12739238.9**

(22) Date of filing: **16.01.2012**

(51) Int Cl.:
***G06F 21/20*** *(0000.00)*    ***H04L 9/32*** *(2006.01)*
***H04M 1/00*** *(2006.01)*

(86) International application number:
**PCT/JP2012/050709**

(87) International publication number:
**WO 2012/102110 (02.08.2012 Gazette 2012/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2011 JP 2011015677**

(71) Applicant: **NTT DOCOMO, INC.**
**Chiyoda-ku**
**Tokyo 100-6150 (JP)**

(72) Inventors:
• **TSUKAMOTO, Masakatsu**
  **Tokyo 100-6150 (JP)**

• **OTA, Manabu**
  **Tokyo 100-6150 (JP)**
• **MORINAGA, Yasuo**
  **Tokyo 100-6150 (JP)**
• **HIGUCHI, Takeshi**
  **Tokyo 100-6150 (JP)**

(74) Representative: **MERH-IP**
**Matias Erny Reichl Hoffmann**
**Paul-Heyse-Strasse 29**
**80336 München (DE)**

(54) **MOBILE INFORMATION TERMINAL, GRIP CHARACTERISTIC LEARNING METHOD, AND GRIP CHARACTERISTIC AUTHENTICATION METHOD**

(57)    A mobile information terminal is provided that can acquire gripping-feature samples to perform user authentication. The mobile information terminal includes: a mode acquisition part that acquires a mode of the mobile information terminal; a trigger monitoring part that, when a sampling trigger determined depending on the mode is generated, outputs a gripping-feature acquisition signal; a gripping-feature sample acquisition part that acquires a gripping-feature acquisition signal and acquires a gripping-feature sample; a switch that switches the state of the mobile information terminal between a learning state and an authentication state; a template learning part that, when the mobile information terminal is in the learning state, learns a user authentication template for each mode using the gripping-feature samples; a user authentication part that, when the mobile information terminal is in the authentication state, compares the learned user authentication template and the gripping-feature sample for each mode to perform user authentication; and a locking part that locks some or all functions of the mobile information terminal when the user authentication fails.

FIG.4

100 PORTABLE TERMINAL

**Description**

[TECHNICAL FIELD]

The present invention relates to a mobile information terminal, a gripping-feature learning method and a gripping-feature authentication method that acquires gripping-feature samples when the mobile information terminal is gripped and perform user authentication.

[BACKGROUND ART]

Recently, various types of financial services, such as electronic money, have become more widespread as mobile information terminals have gained higher functionality. In addition, as mobile information terminals have gained higher functionality, the terminals have been used to store many pieces of private information, such as addresses, emails, photos, and website browsing history. Conventionally, security has been maintained for information handled with mobile information terminals by user authentication (hereafter called log-in authentication) performed when starting to use the mobile information terminals. In log-in authentication, however, after user authentication is performed at the start of use, whether the user is the person who has been authenticated is not continuously monitored. Therefore, if the mobile information terminal is used by another person for some reason after log-in authentication, the other person can operate the mobile information  terminal without performing log-in authentication. Such a security vulnerability in log-in authentication has been a problem. To solve this problem, Patent Literature 1 discloses a portable information terminal in which the positions where the user using the terminal grips the terminal when performing user authentication are acquired by a plurality of pressure sensors; if, after user authentication, the positions where the user grips the terminal are shifted by a specified amount or more, the required data input by the user to use a service is invalidated and the validity of the user authentication already performed is cancelled. Therefore, even if the terminal is stolen during the act of inputting data required to use a service after user authentication, the user authentication and the data input by the user are invalidated when the user is not in possession of the terminal. To use a service after the user authentication is invalidated, it is necessary to perform user authentication again. Therefore, this terminal can effectively prevent unauthorized use by a third party.

[PRIOR ART LITERATURE]

[PATENT LITERATURE]

    Patent literature 1: Japanese Patent Application Laid-Open No. 2001-142849

[SUMMARY OF THE INVENTION]

[PROBLEMS TO BE SOLVED BY THE INVENTION]

However, according to the portable information terminal disclosed in Patent Literature 1, it is necessary to continue to grip the portable information terminal in the same manner after user authentication, and for  example, even in a case where the authorized user changes his or her grip of the portable information terminal, the authentication is invalidated and the user must perform user authentication again from the start. Accordingly, it is extremely difficult to maintain continuous user authentication over a long time period. In addition, in the aforementioned portable information terminal, since a pressing position is fixedly specified, the way in which the authorized user grips the portable information terminal is strictly designated. Therefore, with respect to continuing the validity confirmation, the user must always make an effort to reproduce the designated correct way of gripping the terminal and this situation makes the user feel a large degree of stress. An object of the present invention is to provide a mobile information terminal that enables continued user authentication without interruption even when a gripping-feature has changed over time, such as when a user changes their grip of the terminal, that does not require a user to consciously reproduce a designated correct way of gripping the terminal, and that can acquire gripping-feature samples in a timely manner to perform user authentication.

[MEANS TO SOLVE THE PROBLEMS]

A mobile information terminal of the present invention includes a mode acquisition part, a trigger monitoring part, a gripping-feature sample acquisition part, a switch, a template learning part, a user authentication part, and a locking part. The mode acquisition part acquires the mode of the mobile information terminal. The trigger monitoring part outputs a gripping-feature acquisition signal when a sampling trigger determined depending on the mode is generated. The gripping-feature sample acquisition part acquires the gripping-feature acquisition signal and acquires a gripping-feature sample. The switch switches the mobile information terminal between a learning state and an authentication state. The template learning part learns a user authentication template in each mode by using the gripping-feature samples acquired by the gripping-feature sample acquisition part, when the terminal is in the learning state. The user authentication part compares the learned authentication template with the gripping-feature sample to perform user authentication when the terminal is in the authentication state. The locking part locks some or all of the functions of the terminal if user authentication fails.

[EFFECTS OF THE INVENTION]

According to a mobile information terminal of the present invention, user authentication can be continued without interruption even if a gripping-feature has changed with time, such as when the user changes their grip of the terminal, and in addition, it is not necessary for the user to consciously reproduce a designated correct way of gripping the terminal, and gripping-feature samples can be acquired in a timely manner to perform user authentication.

[BRIEF DESCRIPTION OF THE DRAWINGS]

Fig. 1 is an example view showing a state in which a portable terminal is gripped, which is related to all embodiments;
Fig. 2 is an example view showing gripping pressure distributions output from a pressure sensor array built in the portable terminal, which is related to all the embodiments;
Fig. 3A is an example view showing a notification given to the user by the portable terminal when user authentication template learning is started, which is related to all the embodiments;
Fig. 3B is an example view showing a notification given to the user by the portable terminal when the user authentication template learning is finished, which is related to all the embodiments;
Fig. 4 is a block diagram showing the structure of a portable terminal according to a first embodiment;
Fig. 5 is a block diagram showing the structure of a portable terminal according to a second embodiment;
Fig. 6 is a block diagram showing the structure of a portable terminal according to a third embodiment;
Fig. 7 is a block diagram showing the structure of a portable terminal according to a fourth embodiment;
Fig. 8 is a flowchart showing the operation of the portable terminal according to the first embodiment in a learning state;
Fig. 9 is a flowchart showing the operation of the portable terminals according to the second, third, and fourth embodiments in a learning state;
Fig. 10 is a flowchart showing the operation of the portable terminal according to the first and second embodiments in an authentication state;
Fig. 11 is a flowchart showing the operation of the portable terminal according to the third embodiment in an authentication state;
Fig. 12 is a flowchart showing the operation of the portable terminal according to the fourth embodiment in an authentication state;
Fig. 13 is a view illustrating the operation of an other-person score adder and a locking determination part in the portable terminals according to the third and fourth embodiments;
Fig. 14 is a view illustrating examples of modes, sampling triggers in the modes, boundary values, and other-person determination lines;
Fig. 15 is an example view showing a relationship between a discriminant threshold and an error rate in a browser 1 mode;
Fig. 16 is an example view showing a relationship between a discriminant threshold and an error rate in a browser 2 mode;
Fig. 17 is an example view showing a relationship between a discriminant threshold and an error rate in an email mode;
Fig. 18 is an example view showing a relationship between a discriminant threshold and an error rate in a personal information browsing mode;
Fig. 19 is an example view showing a relationship between a discriminant threshold and an error rate in a calling mode; and
Fig. 20 is an example view showing a relationship between a discriminant threshold and an error rate in an application mode.

[DETAILED DESCRIPTION OF THE EMBODIMENTS]

Now, embodiments of the present invention will be described in detail. Components having the same functions are assigned the same numbers, and a description thereof will given just once.

Example devices made by embodying a mobile information terminal of the present invention include portable terminals, PDAs, portable game machines, electronic pocketbooks, and electronic book readers. In addition to these listed devices, any devices that satisfy the following four requirements can be a mobile information terminal of the present invention. (1) Being used while being gripped, and being able to acquire gripping-features while being used; (2) having different usage modes and having a stable gripping state in each mode; (3) being able to designate a timing for acquiring a gripping-feature sample by an operation in which an operating key on the device body is pressed or the like; and (4) having the risk of leaking personal information and valuable information by way of loss or theft. In the following descriptions of embodiments, a portable terminal will be taken as a specific example and explained in detail.

First, gripping-feature samples to be acquired by portable terminals 100, 100', 100", and 100"' according to all embodiments of the present invention will be described. Since human beings are innately different in (1) the lengths of their fingers and (2) the strength of their gripping force and, as an acquired nature, (3) in the habit of gripping a portable terminal, gripping-features are extremely suitable as biometric information used for user authentication. More specifically, gripping-feature authentication has almost the same level of precision as general face authentication in terms of the false rejection rate and the false acceptance rate. Gripping-feature samples can include, for example, gripping-pressure distributions, gripping-shape distributions and gripping-heat distributions. As an example method of acquiring these gripping-feature samples, when pressure sensors are distributed in an array on the portable terminals 100, 100', 100", and 100"', the gripping-pressure distributions can be acquired. In the same manner, when CCD (CMOS) sensors are planarly distributed in an array, the gripping-shape distributions can be obtained. In the same manner, when infrared sensors are planarly distributed in an array, the gripping-heat distributions can be obtained. When a portable terminal has operating keys at the rear surface thereof (touch sensitive panel), gripping-features can be acquired even from the pressing states (whether the operating keys or the touch sensitive panel is pressed) of the operating keys (touch sensitive panel) when the terminal is gripped.

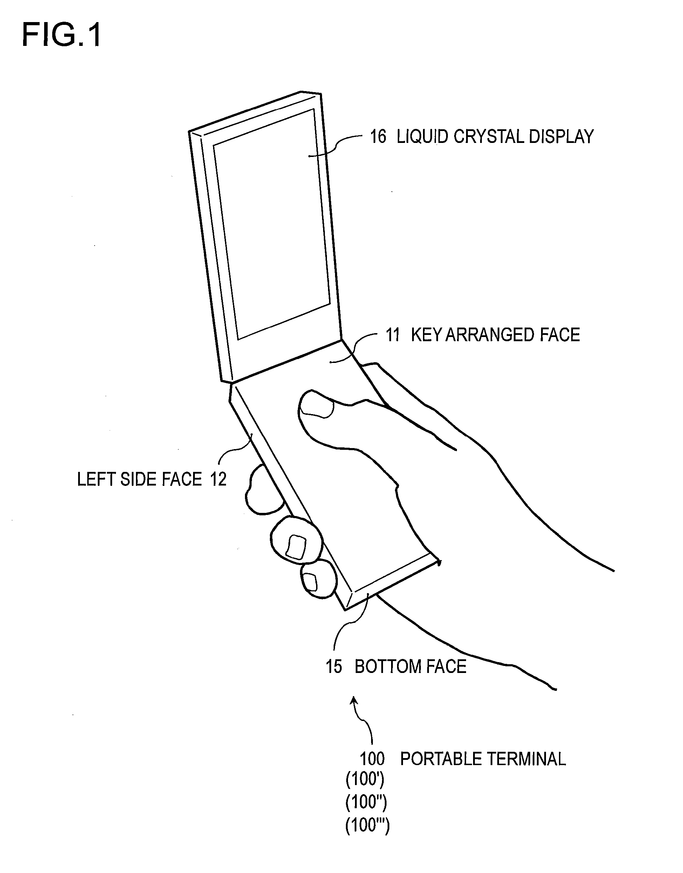

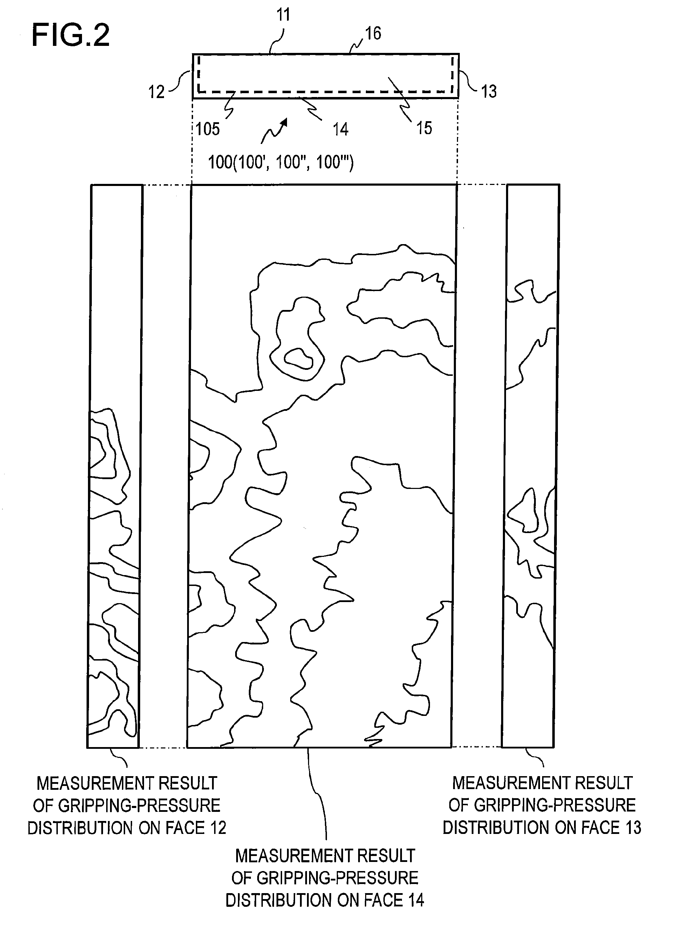

In the following descriptions of the embodiments, a gripping-pressure distribution will be used as a gripping-feature sample. Acquisition of a gripping-feature distribution by using a pressure sensor array will be described in detail with reference to Fig. 1 and Fig. 2. Fig. 1 is an example view showing a state in which the portable terminals 100, 100', 100", and 100"' according to all the embodiments are gripped. Fig. 2 is an example view showing gripping pressure distributions output from a pressure sensor array built in the portable terminals 100, 100', 100", and 100"' according to all the embodiments. It is assumed here that the portable terminals 100, 100', 100", and 100"' are general folding-type portable terminals. Two long-plate-shaped bodies are foldably coupled with a coupling shaft at short sides of the bodies. One of the bodies has operating keys. The surface on which the operating keys are arranged is called a key arranged face 11, the side faces in the longitudinal direction at the left and right of the key arranged face 11 are called a left side face 12 and a right side face 13, the rear surface of the key arranged face 11 is called a rear face 14, and a side face of the key arranged face 11 in the width direction at the bottom (face opposite the face where the coupling shaft is placed) is called a bottom face 15. A liquid crystal display 16 is provided in the other body on a surface facing the key arranged face 11 when the terminal is folded.

The portable terminals 100, 100', 100", and 100"' are configured as described above, but the foregoing description explains merely an example for describing in detail the gripping pressure distributions output from the pressure sensor array, to be described later. Therefore, the portable terminals 100, 100', 100", and 100"' are not necessarily folding-type terminals, such as that shown in Fig. 1, and can have any shapes, such as a straight type or a sliding type. Referring back to Fig. 1, it is assumed that the user of the portable terminals 100, 100', 100", and 100"' grips the portable terminals 100, 100', 100", and 100"' as shown in Fig. 1.

A pressure sensor array 105 (indicated by a dotted line in Fig. 2) is built so as to be able to detect external gripping pressures, in the body where the key arranged face 11 of the portable terminals 100, 100', 100", and 100"' is arranged. The pressure sensor array 105 can detect the gripping pressure distributions on the left side face 12, the right side face 13, and the rear face 14 of the portable terminals 100, 100', 100", and 100"'. By analyzing the signals sent from respective pressure sensors of the pressure sensor array 105, it is possible to draw a gripping-pressure distribution such as those shown in Fig. 2. It is understood from the gripping-pressure distribution shown in Fig. 2 that characteristics of the fingers and the gripping force of the user are exhibited clearly on the left side face 12, the right side face 13, and the rear face 14. The gripping-pressure distribution acquired in this way can be used as a gripping-feature sample in the present invention.

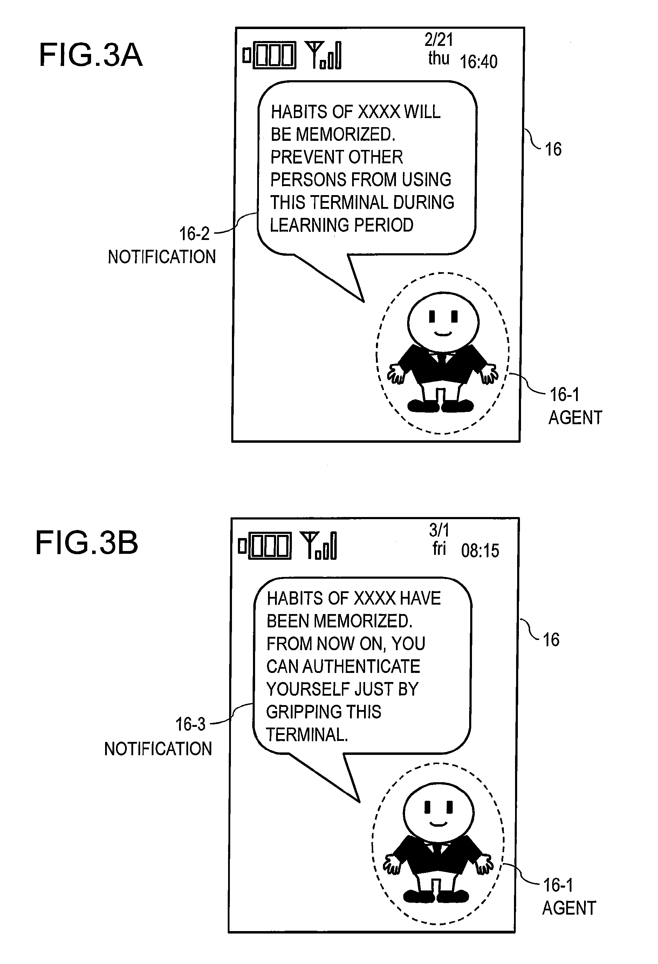

Next, notifications to be given to the user are described with reference to Figs. 3A and 3B, the notifications being given when the portable terminals 100, 100', 100", and 100"' start and finish learning of user authentication templates necessary for user authentication, through acquiring gripping-feature samples, in the embodiments of the present invention. Figs. 3A and 3B are example views showing notifications given to the user when the portable terminals 100, 100', 100", and 100"' according to all the embodiments start and finish learning of user authentication templates. For example, the portable terminals 100, 100', 100", and 100"' learn user authentication templates, to be described later, when the terminals are used for the first time. When learning of user authentication templates is started, a screen such as that shown in Fig. 3A is displayed on the liquid crystal display 16. The following notification 16-2 is shown on the liquid crystal display 16 under the assumption that an agent 16-1 residing in the portable terminal talks to the user. "Habits of xxxx (user name) will be memorized. Prevent other people from using this terminal during the learning period." Since the user is not given any notification that specifies a special way of use, as described above, the user continues to use the portable terminals 100, 100', 100", and 100"' in a usual manner without paying special attention.

A gripping-feature sample is automatically acquired upon a trigger (hereafter called a sampling trigger), such as when the user performs a predetermined key operation in a certain mode (such as during email operation or during a call) in the learning period, which will be described in detail later. The user is not provided with any information indicating that a gripping-feature sample will be taken (was taken) at the moment when a gripping-feature sample is taken, or before or after that. Therefore, from the user's viewpoint, gripping-feature samples are automatically acquired and accumulated at the acquisition timing, such as when the user performs an unconscious key operation. Since gripping-feature samples are acquired in this way in the present invention, the samples reflect the state in which the user uses the terminal unconsciously and most spontaneously, in a relaxed manner. By doing so, the variance of observed values in gripping-feature samples can be made small.

If acquisition of gripping-feature samples is declared in advance, the user would be on guard when receiving the declaration, and may grip the terminal not in a usual way but in a way that the user thinks is correct. The user may forget the usual way of gripping the terminal when receiving a declaration in advance. These would make the acquisition of precise gripping-feature samples difficult. This problem can be solved and the acquisition of precise gripping-feature samples is made possible if gripping-feature samples can be acquired while the user is unconscious of the acquisition, as described above. As described above, in the learning period, using a key operation that the user unconsciously performed as a sampling trigger, gripping-feature samples are accumulated for each mode. When a sufficient number of gripping-feature samples have been accumulated for all of the modes, a notification such as a notification 16-3 shown in Fig. 3B is displayed, and the learning period ends.

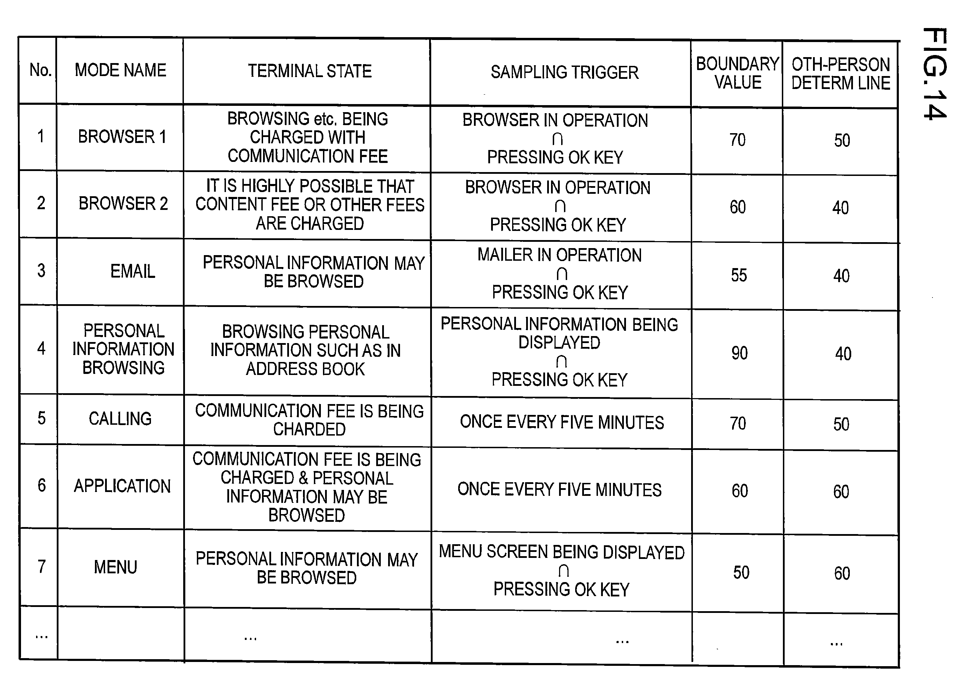

Next, modes and sampling triggers used in the present invention will be described in detail with reference to Fig. 14. Fig. 14 illustrates examples of modes, sampling triggers in the modes, boundary values and other-person determination lines. The boundary values and other-person determination lines will be described later. As illustrated in Fig. 14, modes include browser 1, browser 2, email, personal information browsing, making calls, application, and menu. The browser 1 mode indicates an operating state of the portable terminal in which a communication fee is being incurred or may be incurred because web pages are being browsed. Therefore, the browser 1 mode corresponds, for example, to an operating state in which browser software installed in the portable terminals 100, 100', 100", and 100"' is activated and the portal page of the portable terminals 100, 100', 100", and 100"' is being browsed. The sampling trigger specified for the browser 1 mode is "browser in operation ∩ pressing OK key". This means that, when the user presses an OK key in the portable terminal 100, 100', 100", or 100"' if the browser is in operation, the operation is used as the sampling trigger, and gripping-feature samples are acquired. The browser 2 mode indicates an operating state of the portable terminals in which a content fee is being incurred or may be incurred because web pages are being browsed. Therefore, the browser 2 mode corresponds, for example, to an operating state in which browser software installed in the portable terminals 100, 100', 100", and 100"' is activated and application software for the portable terminals 100, 100', 100", and 100"' is being downloaded for a fee. The sampling trigger specified for the browser 2 mode is "browser in operation ∩ pressing OK key". This is the same as in the browser 1 mode. The email mode indicates an operating state in which personal information written in an email may be read. Therefore, the email mode corresponds, for example, to an operating state in which a mailer installed in the portable terminals 100, 100', 100", and 100"' is activated and an email folder of the portable terminals 100, 100', 100", and 100"' is being browsed; a return email is being written with the mailer; or an email is being received. The sampling trigger specified for the email mode is "mailer in operation ∩ pressing OK key". This means that, when the user presses the OK key in the portable terminal 100, 100', 100", or 100"' if the mailer is in operation, the operation is used as the sampling trigger, and a gripping-feature sample is acquired. The personal information browsing mode indicates an operating state in which personal information such as that described in an address book is being browsed. Therefore, the personal information browsing mode corresponds, for example, to an operating state in which an address book stored in the portable terminals 100, 100', 100", and 100"' is being browsed. The sampling trigger specified for the personal information browsing mode is "personal information being displayed ∩ pressing OK key". This means that, when the user presses the OK key in the portable terminal 100, 100', 100", or 100"' if personal information, such as an address book, is being displayed, the operation is used as the sampling trigger, and a gripping-feature sample is acquired. Pressing the OK key is just an example of a sampling trigger caused by pressing a key. For each kind of mode, pressing any operating key may be specified as a sampling trigger.

Unlike in the modes described above, operating keys such as the OK key are not pressed much in some modes. For example, the calling mode indicates an operating state of the portable terminals in which a call fee is being charged.

Therefore, the calling mode corresponds, for example, to an operating state in which a call is being made by using the portable terminals 100, 100', 100", and 100'''. In the calling mode, since operating keys are not pressed much, a sampling trigger is generated automatically once every five minutes to acquire a gripping-feature sample, without depending on the pressing of operating keys. The application mode indicates an operating state of the portable terminals in which a communication fee may be incurred or in which personal information may be browsed. Therefore, the application mode corresponds, for example, to an operating state in which application software installed in the portable terminals 100, 100', 100", and 100''' is activated. In the application mode, since different operating keys are pressed depending on the application, a sampling trigger is automatically generated once every five minutes. The time period of five minutes at which the sampling trigger is generated automatically is just an example, and any time period appropriate for the mode and the type of the portable terminal may be specified. The menu mode indicates an operating state of the portable terminals in which personal information may be browsed depending on which screen is selected from the menu of the portable terminals. Therefore, the menu mode corresponds, for example, to an operating state in which the menu screen of the portable terminals 100, 100', 100", and 100''' is browsed and a target destination is being selected. In the menu mode, "menu screen being displayed $\cap$ pressing OK key" is specified as the sampling trigger.

When gripping-feature samples are acquired separately in the modes of the portable terminal as described above, the gripping-feature samples have small variations and are stable. By specifying the timing at which a stable gripping state can be expected as the sampling trigger in a mode, stable gripping-feature samples can be acquired with even fewer variations. As described above, since the user unconsciously generates the sampling trigger in each mode in the portable terminal, and gripping-features are automatically acquired at the timing when the sampling triggers are generated, precise gripping-feature samples are acquired. The modes are specified according to the functions of the portable terminal, such as browsing and emailing, in the above description. The modes are not necessarily specified according to the functions, however, because the modes can be specified according to the orientation of the portable terminal by using information output from a sensor, such as an acceleration sensor, a gyroscope, or a camera.

[First Embodiment]

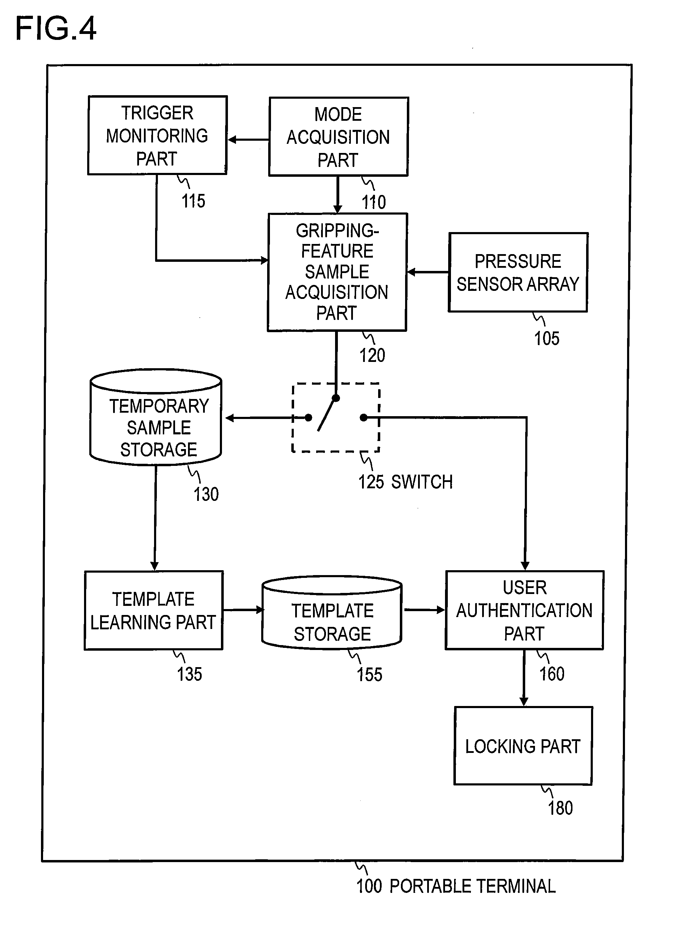

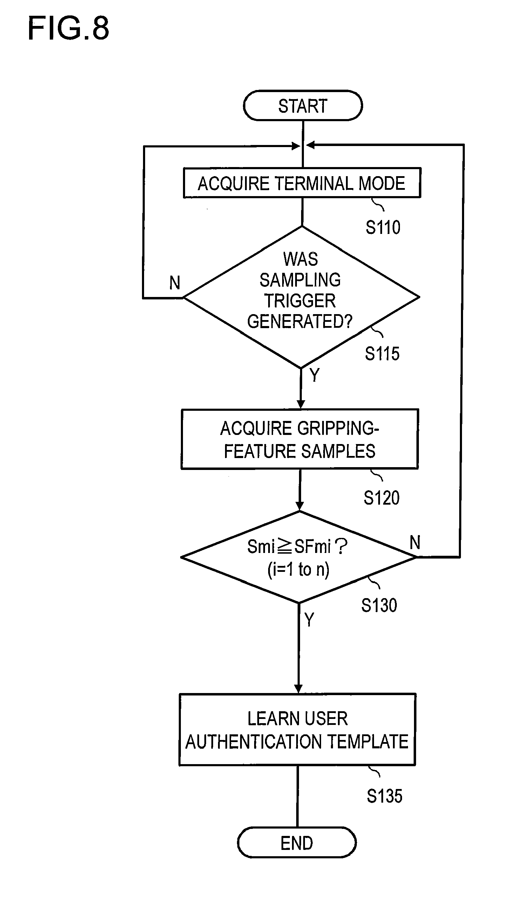

With the above described conditions being used as a premise, a portable terminal 100 for implementing user authentication by acquiring gripping-feature samples according to a first embodiment will be described in detail. The operation of the portable terminal 100 according to the first embodiment in a learning state will be described first with reference to Fig. 4 and Fig. 8. Fig. 4 is a block diagram showing the structure of the portable terminal 100. Fig. 8 is a flowchart showing the operation of the portable terminal 100 in the learning state. The portable terminal 100 includes a pressure sensor array 105, a mode acquisition part 110, a trigger monitoring part 115, a gripping-feature sample acquisition part 120, a switch 125, a temporary sample storage 130, a template learning part 135, a template storage 155, a user authentication part 160, and a locking part 180.

As described earlier, the portable terminal 100 is provided with the switch 125, and the switch 125 can switch between the learning state (switch to the temporary sample storage 130) and an authentication state (switch to the user authentication part 160) in the portable terminal 100. It is assumed here that the switch 125 is set to the learning state. The pressure sensor array 105 is built in the portable terminal 100, as described earlier. The mode acquisition part 110 acquires the mode of the portable terminal 100 (S110). The trigger monitoring part 115 outputs a gripping-feature acquisition signal when a sampling trigger determined depending on the mode is generated (Yes in S115). If the sampling trigger is not generated, the processing returns to step S110, and the mode acquisition part 110 newly acquires the mode of the portable terminal 100 (No in S115, and S110). The gripping-feature sample acquisition part 120 acquires the gripping-feature acquisition signal from the trigger monitoring part 115, and acquires a gripping-feature sample from the pressure sensor array 105 (S120).

It is assumed here that the total number of modes is n (n is an integer equal to 1 or more), the number of gripping-feature samples already acquired in the i-th mode is $S_{mi}$, and the number of learning-start samples is $SF_{mi}$. The number of learning-start samples, $SF_{mi}$, means a predetermined number of samples required for learning the user authentication template. It is already found that, even if the user authentication template is learned with a small number of acquired gripping-feature samples, the user authentication template cannot be generated with a sufficient precision. Therefore, the number of samples empirically found to be required to obtain a highly precise user authentication template is set in the number of learning-start samples, $SF_{mi}$. Consequently, when the number of gripping-feature samples, $S_{mi}$, in each of all the modes (i = 1 to n) stored in the temporary sample storage 130 reaches the number of learning-start samples, $SF_{mi}$, ($S_{mi} > SF_{mi}$), the processing proceeds to step S 135, and the template learning part 135 learns the user authentication template with the gripping-feature samples in each mode and stores the learned user authentication template in the template storage 155 (Yes in S 130, S 135). When the number of gripping-feature samples, $S_{mi}$, in each of all the modes (i = 1 to n) stored in the temporary sample storage 130 reaches the number of learning-start samples, $SF_{mi}$, ($S_{mi} > SF_{mi}$), the processing proceeds to step S 135, and the template learning part 135 learns the user authentication template with the gripping-feature samples in each mode and stores the learned user authentication templates in the template storage 155 (Yes in S130, and S135). If the number of gripping-feature samples, Smi, in each of all the modes (i = 1 to n) stored in the temporary sample storage 130 does not reach the number of learning-start samples, SFmi, (Smi < SFmi), the processing returns to the start, and subsequently the operations to acquire the mode of the terminal and acquire gripping-feature samples simultaneously with generation of a sampling trigger are repeated (No in S130). Hence, S110, S115 and S120 are repeated until user authentication templates are obtained for all of the modes (i = 1 to n) (No in S 130). The user authentication template is generated from such as an average for the respective element positions of the gripping-feature samples (gripping pressure distributions in the embodiments).

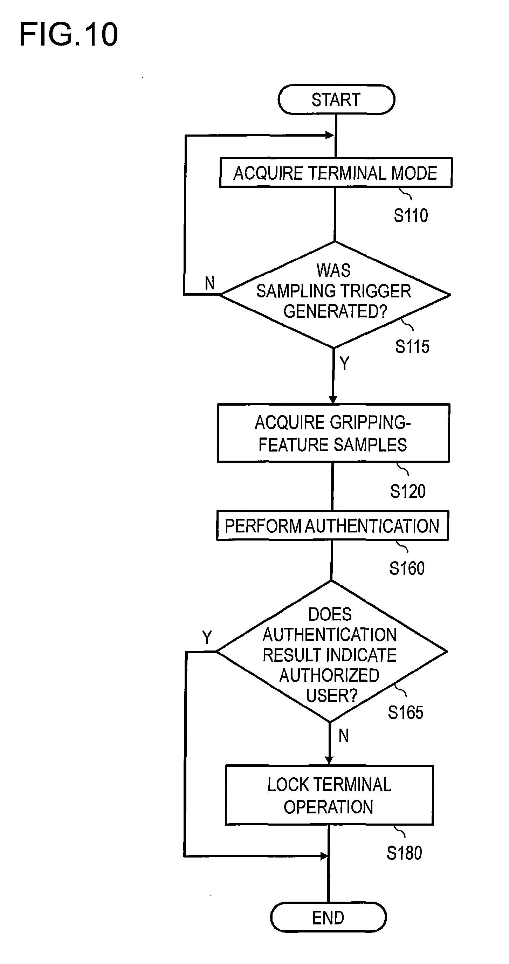

Next, with reference to Fig. 4 and Fig. 10, the operation of the portable terminal 100 in the authentication state according to the first embodiment will be described. Fig. 10 is a flowchart showing the operation of the portable terminal 100 in the authentication state according to the present embodiment. It is assumed here that the switch 125 of the portable terminal 100 sets the state to the authentication state. It is also assumed that, when the authentication state starts, the learning state described above has been already completed, and the user authentication template has already been stored in the template storage 155 for every mode (i = 1 to n). First, the mode acquisition part 110 acquires the mode of the portable terminal 100 (S110). The trigger monitoring part 115 outputs a gripping-feature acquisition signal when a sampling trigger determined depending on the mode is generated (Yes in S115). In contrast, if a sampling trigger is not generated, the processing returns to the terminal mode acquisition step S110. The gripping-feature sample acquisition part 120 acquires the gripping-feature acquisition signal from the trigger monitoring part 115, and acquires a gripping-feature sample from the pressure sensor array 105 (S120). Next, the user authentication part 160 compares the learned user authentication template with the gripping-feature sample to perform user authentication (S160). If this user authentication fails (No in S165), the locking part 180 locks a part or the whole of the functions of the portable terminal 100 (S 180). If the user authentication is successful (Yes in S 165), the user authentication processing ends.

The user authentication template and the gripping-feature samples can be compared in the following way, for example. The user authentication part 160 calculates the distance (for example, Mahalanobis's generalized distance) between the user authentication template and the gripping-feature sample acquired in the authentication state. The user authentication part 160 determines that the acquired gripping-feature sample was acquired from the authorized user when the distance is equal to or smaller than a predetermined value. The user authentication part 160 determines that the acquired gripping-feature sample was not acquired from the authorized user when the distance is larger than the predetermined value. Thus, by performing user authentication using a gripping-feature sample acquired simultaneously with generation of a sampling trigger in a state in which the user is unconscious of the acquisition, a precise user authentication template and a gripping-feature sample can be acquired.

Examples of the distance serving as a determination criterion, described earlier, will be explained below. It is assumed here, for example, that a pressure value $x_{i,j}$ was acquired from the i-th sensor element in the j-th measurement performed for learning, where i = 1, 2, ..., n, j = 1, 2, ..., m, n indicates the number of sensor elements and is an integer equal to 2 or more, and m indicates the number of gripping-feature measurements for learning and is an integer equal to 2 or more. The average of the pressure values, the variance, and the vectors of the average and the variance are defined as follows:

$$\overline{x}_i = \frac{1}{m}\left(\sum_{j=1}^{m} x_{i,j}\right)$$

$$s_i^2 = \frac{1}{m}\sum_{j=1}^{m}(\overline{x}_i - x_{i,j})^2$$

$$\mathbf{X} = (\overline{x}_1, \overline{x}_2, \cdots, \overline{x}_n); \quad S^2 = (s_1^2, s_2^2, \cdots, s_n^2)$$

The user authentication template is indicated with a subscript "le". The Mahalanobis's generalized distance $f_1$ is given by the following expression.
$$f_1 = \left[ \sum_{i=1}^{n} \left( \frac{x_i - {}_{le}\overline{x}_i}{s_i} \right)^2 \right]^{1/2}$$

As another example distance, the Euclid distance $f_2$ can be defined by the following expression.
$$f_2 = \left[ \sum_{i=1}^{n} (x_i - {}_{le}\overline{x}_i)^2 \right]^{1/2}$$

As still another example distance, the Manhattan distance $f_3$ can be defined by the following expression.
$$f_3 = \sum_{i=1}^{n} | x_i - {}_{le}\overline{x}_i |$$

These three distances can be used to perform determination with the following determination expression in common. Data of the authorized user, acquired for determination, is indicated with a subscript "self", and data of other people is indicated with a subscript "oth". When the threshold used to determine other people is defined as $x_{thre}$, the following expression can be used to determine other people.

$$x_{thre} < {}_{oth}f$$

It is assumed here that gripping-feature sample data of other people is available in some method, such as embedding the data in the portable terminal in advance, allowing the user to access the data on the Internet, or allowing the user to acquire the data by asking other people to grip the portable terminal. From the data of other people and the user authentication template, the distance ${}_{oth}f$ is calculated. The threshold $x_{thre}$ is determined to satisfy the following condition after the distance ${}_{self}f$ is calculated from a gripping-feature sample of the authorized user, not used for template learning, and the learned template.

$$_{self}f < x_{thre} < {}_{oth}f$$

The user authentication template is obtained from the average of gripping-feature samples in the foregoing description. However, other methods can be used. For example, a pressure distribution acquired from n sensor elements is divided into appropriate areas (10 areas, for example, where n is larger than 10); the sum (or the average) of gripping pressures in each of the areas is calculated to generate vector data consisting of, as a vector element, the sum (or the average) of gripping pressures in the area; and such vector data is generated for m gripping-feature samples, and the average thereof is used as the template. Alternatively, the positions of the sensor elements having the top 20 pressure values among n sensor elements are recorded; vector data thereof is generated; and such vector data is generated for m gripping-feature samples, and the average thereof is used as the template.

[Second Embodiment]

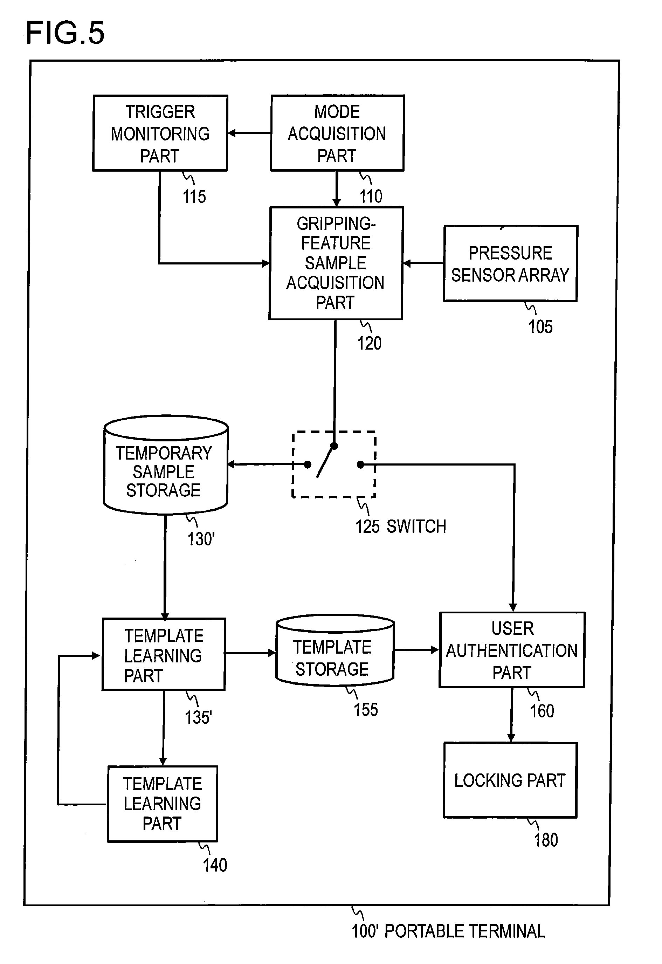

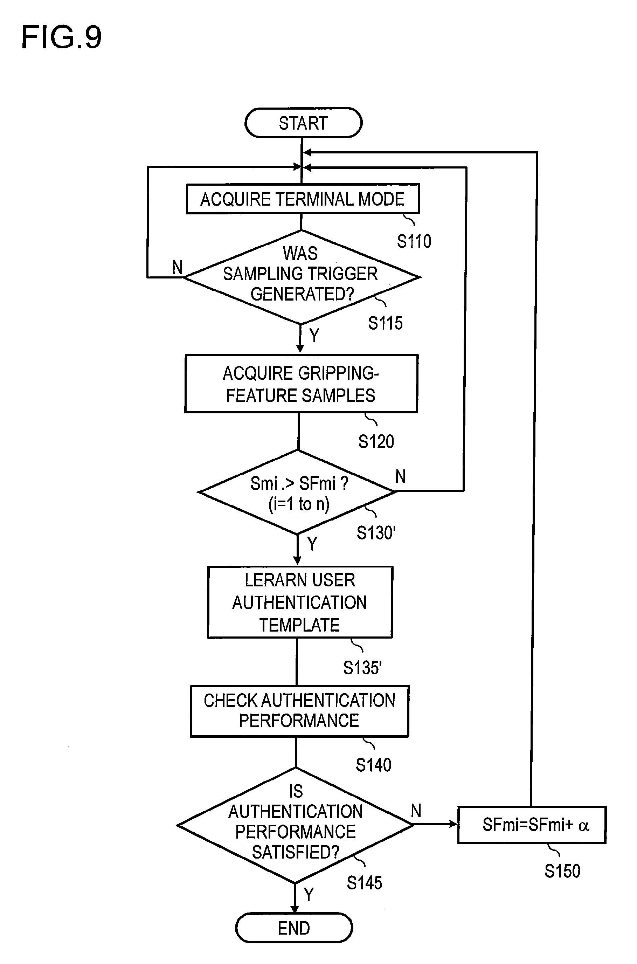

A portable terminal 100' according to a second embodiment, which is an example terminal in which the user authentication template learning function of the portable terminal 100 according to the first embodiment, described above, has been further improved, will be described in detail with reference to Fig. 5 and Fig. 9. Fig. 5 is a block diagram showing the structure of the portable terminal 100'. Fig. 9 is a flowchart showing the operation of the portable terminal 100' in the learning state. As shown in Fig. 5, the portable terminal 100' of the present embodiment includes a pressure sensor array 105, a mode acquisition part 110, a trigger monitoring part 115, a gripping-feature sample acquisition part 120, a switch 125, a temporary sample storage 130', a template learning part 135', an authentication performance checking part 140, a template storage 155, a user authentication part 160, and a locking part 180. Since the operation of each part other than the temporary sample storage 130', the template learning part 135' and the authentication performance checking part 140 is exactly the same as that of the part having the same reference numeral in the first embodiment, a description thereof is omitted.

It is assumed that the switch 125 is set to the learning state. The temporary sample storage 130' stores acquired gripping-feature samples by allocating each acquired gripping-feature sample to either "samples for learning" or "samples for performance verification" for each mode. The second embodiment differs from the first embodiment in this respect. The term "samples for learning" refers to gripping-feature samples to be used for generating user authentication templates. The term "samples for performance verification" refers to gripping-feature samples that are used to check the authentication performance as described later. Further, it is assumed that the authentication performance checking part 140 previously stores "other-person samples" in addition to the aforementioned two kinds of allocated gripping-feature sample. The term "other-person sample" refers to a gripping-feature sample acquired when a person other than the authorized user gripped the portable terminal 100'. The other-person samples can be acquired, for example, by causing multiple people other than the authorized user to grip the portable terminal 100' at the time of factory shipment of the portable terminal 100' to thereby acquire a fixed number of gripping-feature samples of people other than the authorized user, and storing the acquired gripping-feature samples in advance in the authentication performance checking part 140 as other-person samples. Further, a configuration may also be adopted in which gripping-feature samples (other-person samples) of people other than the authorized user are stored on a network, and the authentication performance checking part 140 can acquire the other-person samples by accessing the network.

First, the mode acquisition part 110 acquires the mode of the portable terminal 100' (S110). The trigger monitoring part 115 outputs a gripping-feature acquisition signal when a sampling trigger determined in each mode is generated (Yes in S115). If the sampling trigger is not generated, the processing returns to the start, and the mode acquisition part 110 newly acquires the mode of the portable terminal 100' (No in S115 and S110). The gripping-feature sample acquisition part 120 acquires the gripping-feature acquisition signal sent from the trigger monitoring part 115 to acquire a gripping-feature sample from the pressure sensor array 105 (S 120). The operations thus far are the same as operations when the portable terminal 100 of the first embodiment is in a learning state. The acquired gripping-feature sample is allocated to either "samples for learning" or "samples for performance verification" for each mode and stored in the temporary sample storage 130'. Although the allocation method and number of samples is arbitrary, a large number of learning samples is preferable. When the number of gripping-feature samples (samples for learning), $Smi$, in each of all the modes (i = 1 to n) stored in the temporary sample storage 130' reaches the number of learning-start samples, $SFmi$, ($Smi > SFmi$), the processing proceeds to step S135', and the template learning part 135' learns the user authentication template with the gripping-feature samples in each mode and stores the learned user authentication template in the template storage 155 (Yes in S130', and S135'). If the number of gripping-feature samples (samples for learning), $Smi$, in each of all the modes (i = 1 to n) stored in the temporary sample storage 130' does not reach the number of learning-start samples, $SFmi$, ($Smi < SFmi$), the processing returns to the start, and subsequently the operations to acquire the mode of the terminal and acquire a gripping-feature sample simultaneously with generation of a sampling trigger are repeated (No in S130', and S110 to S120). The user authentication template is generated from the average of the samples for learning and other factors.

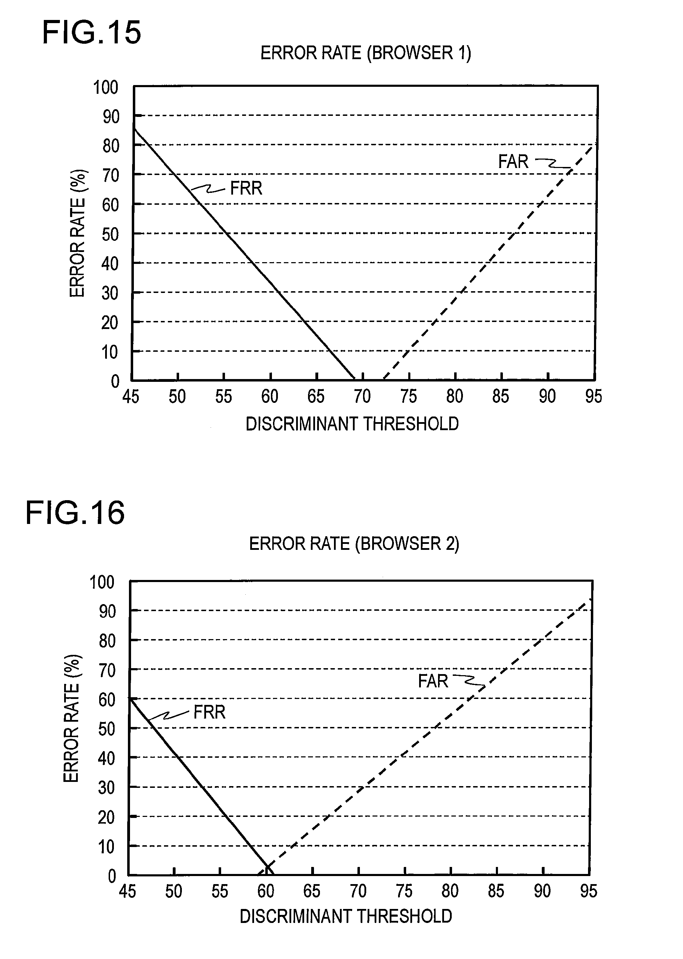

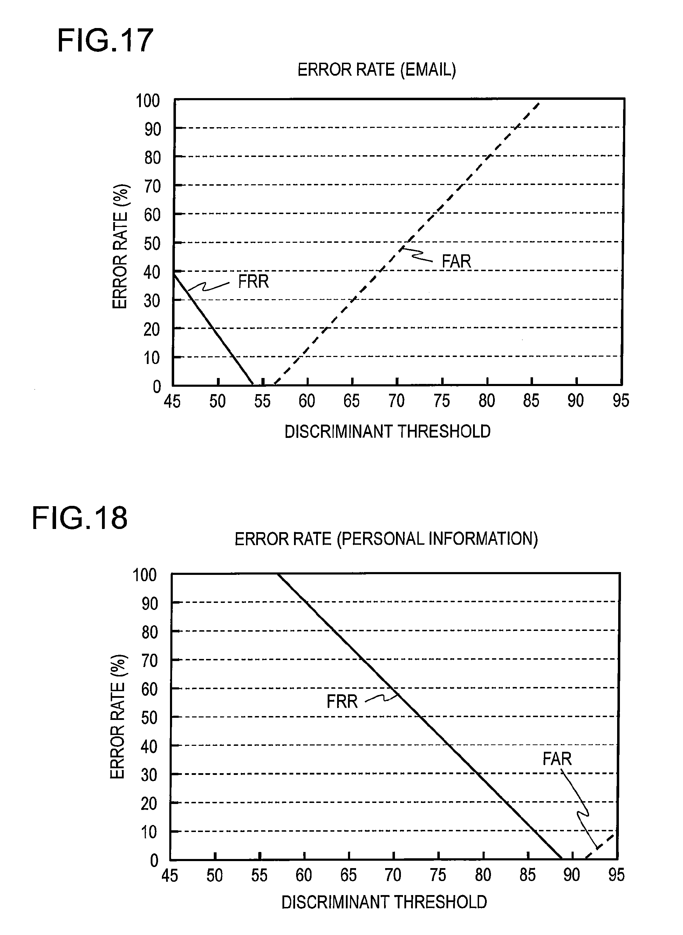

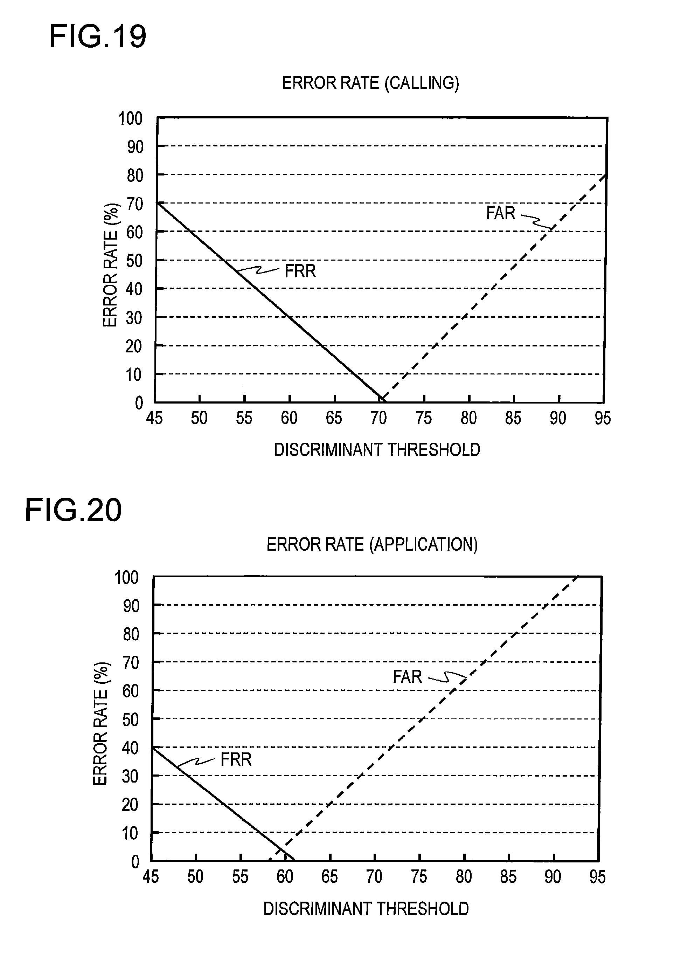

Next, the operations of the authentication performance checking part 140 will be described in detail. The authentication performance checking part 140 calculates the respective distances between the user authentication template and samples for performance verification, and the respective distances between the user authentication template and the other-person samples. As described above, Mahalanobis's generalized distance or the like can be used as the distance in this case. Based on the distribution of the distances between the user authentication template and the samples for performance verification, the authentication performance checking part 140 takes a certain distance value as an upper limit (this upper limit distance value is referred to hereunder as "discriminant threshold") and determines the relationship between the discriminant threshold and a false rejection rate (FRR) in a case where samples for performance verification for which the aforementioned distance is greater than or equal to the discriminant threshold are erroneously determined not to be the authorized user. Similarly, based on the distribution of the distances between the user authentication template and the other-person samples, the authentication performance checking part 140 takes the discriminant threshold as an upper limit and determines the relationship between the discriminant threshold and a false acceptance rate (FAR) in a case where other-person samples for which the aforementioned distance is less than or equal to the discriminant threshold are erroneously determined to be the authorized user. This will now be explained specifically using examples shown in Fig. 15 to Fig. 20.

Figs. 15 to 20 are example views showing a relationship between a discriminant threshold and an error rate in a browser 1 mode, a browser 2 mode, an email mode, a personal information browsing mode, a calling mode and an application mode, respectively. The horizontal axis of the respective graphs indicates the discriminant threshold, and the vertical axis indicates the error rate (false rejection rate or false acceptance rate). In each graph, a thick solid line indicates the false rejection rate (FRR), and a thick dashed line indicates the false acceptance rate (FAR). For example, referring to the graph of the error rate for browser 1 shown in Fig. 15, the false rejection rate (FRR) decreases as the discriminant threshold increases, and becomes 0 when the discriminant threshold is a little less than 70. This means that in the distribution of distances between the user authentication template and the samples for performance verification, there were no samples for performance verification having a distance exceeding 70. Similarly, when the discriminant threshold exceeds 73, the false acceptance rate (FAR) starts to increase from 0. This means that in the distribution of distances between the user authentication template and the other-person samples, there were no other-person samples having a distance less than 73. Since a state in which the false rejection rate and the false acceptance rate are both 0 is the most desirable, it is found that it is most suitable to set the boundary value of the discriminant threshold (hereunder, referred to as simply "boundary value") in the browser 1 mode to a value from 70 to 72. Thus, in the browser 1 mode, both the false rejection rate (FRR) and the false acceptance rate (FAR) can be made 0 by setting the boundary value to a value from 70 to 72.

On the other hand, in the browser 2 mode, there is no boundary value at which the FRR and FAR are 0 at the same time. Since the graph (thick solid line) of the false rejection rate (FRR) and the graph (thick dashed line) of the false acceptance rate (FAR) intersect in the first quadrant, there is no condition under which they both become 0. In this case, a discriminant threshold at a position at which the graph (thick solid line) of the false rejection rate (FRR) and the graph (thick dashed line) of the false acceptance rate (FAR) intersect can be used as the boundary value. If the boundary value is set to 60 in the example of the browser 2 mode shown in Fig. 16, the false rejection rate (FRR) and the false acceptance rate (FAR) can each be suppressed to a low value and the accuracy of authentication can be raised. However, if the error rate is in a high state at the position at which the graph (thick solid line) of the false rejection rate (FRR) and the graph (thick dashed line) of the false acceptance rate (FAR) intersect, high accuracy can not be expected even if a discriminant threshold at this position is set as the boundary value. For example, if a case is assumed in which the graph (thick solid line) of the false rejection rate (FRR) and the graph (thick dashed line) of the false acceptance rate (FAR) intersect at a position at which the error rate is 40%, even if the discriminant threshold at the intersecting position is set as the boundary value, the accuracy will be noticeably low since the probability of the authorized user being erroneously rejected as an unauthorized user and the probability of an unauthorized user being accepted as an authorized user are always 40%, respectively, at that boundary value. This is a phenomenon that occurs because the number of gripping-feature samples is insufficient, and the phenomenon can be eliminated by additionally acquiring a large number of gripping-feature samples. This problem can be solved by increasing the number of gripping-feature samples until a boundary value can be set at which the FRR and the FAR become equal to or less than a predetermined probability (for example, 5%). Thus, as illustrated in Fig. 14, the boundary value of the browser 1 mode can be set to 70, the boundary value of the browser 2 mode can be set to 60, the boundary value of the email mode can be set to 55, the boundary value of the personal information browsing mode can be set to 90, the boundary value of the calling mode can be set to 70 and the boundary value of the application mode can be set to 60 and the like so that the FRR and the FAR become equal to or less than a predetermined probability.

Accordingly, the authentication performance checking part 140 checks the relationship between the discriminant threshold and the error rate in each of the aforementioned modes (S 140), and if a boundary value does not exist at which the FRR and the FAR are equal to or less than a predetermined probability (for example, 5%) (No in 145), the number of learning-start samples SFmi is made SFmi+$\alpha$ and the processing returns to the start (S150). Here, $\alpha$ is a predetermined integer that is equal to or greater than 1. The steps S110 to S 130' are repeated until the newly added $\alpha$ gripping-feature samples (samples for learning) are acquired. When the additional $\alpha$ gripping-feature samples (samples for learning) have been acquired, the processing proceeds to step S135' to learn a user authentication template. Next, similarly to the above described processing, the authentication performance checking part 140 checks the relationship between the discriminant threshold and the error rate in each of the modes (S 140), and determines whether or not a boundary value at which the FRR and the FAR are equal to or less than a predetermined probability (for example, 5%) exists (S 145). If a boundary value at which the FRR and the FAR are equal to or less than the predetermined probability exists (Yes in S 145), the learning operation is ended (End). If a boundary value at which the FRR and the FAR are equal to or less than the predetermined probability does not exist (No in S 145), the processing proceeds to step S150 to make the number of learning-start samples SFmi = SFmi+$\alpha$ and returns to the start (S150). Thus, by additionally acquiring gripping-feature samples until satisfying a predetermined authentication performance (FRR and FAR are equal to or less than a fixed value), highly accurate authentication in which both the false rejection rate and the false acceptance rate are low can be realized. Next, a difference between the authentication state of the present embodiment and the authentication state of the first embodiment is described. The user authentication part 160 of the portable terminal 100 of the first embodiment determines that an acquired gripping-feature sample is not that of the authorized user unless a distance between the user authentication template and the gripping-feature sample that is acquired in the authentication state is equal to or less than a predetermined value. According to the second embodiment, the aforementioned boundary value is set as the "predetermined value". The other operations in the authentication state of the present embodiment are the same as operations in the authentication state of the portable terminal 100 of the first embodiment, and hence a description thereof is omitted.

[Third embodiment]

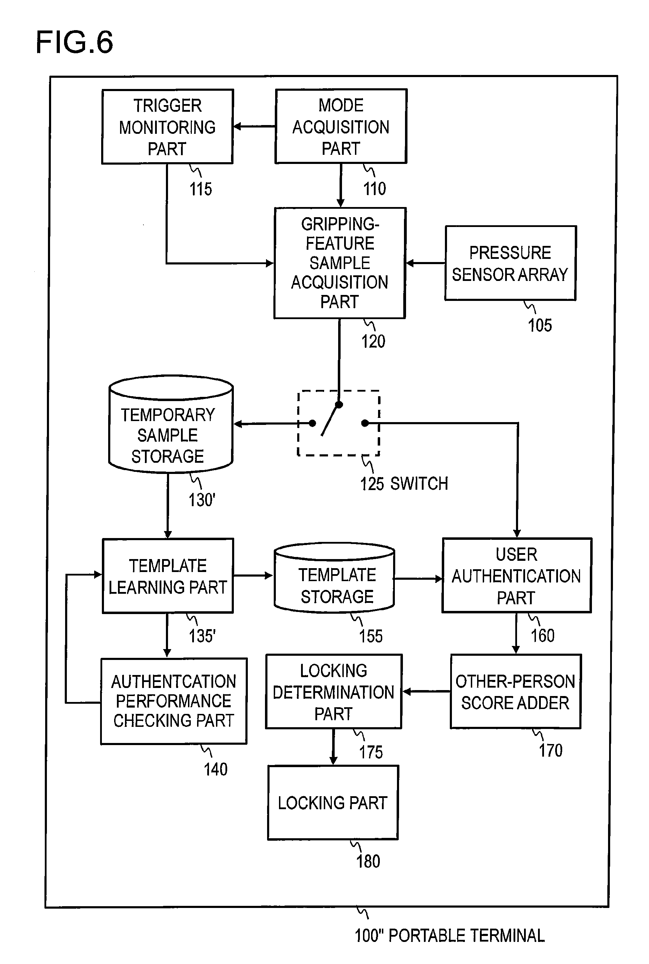

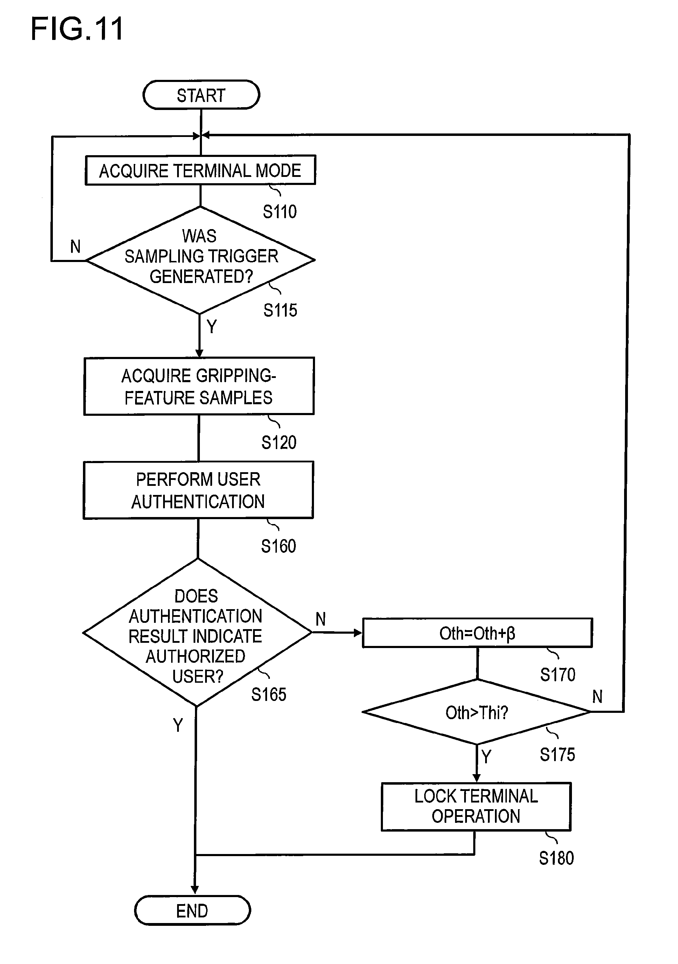

A portable terminal 100" according to a third embodiment will be described in detail with reference to Fig. 6 and Fig. 11, which is an example terminal in which the authentication function of the portable terminal 100' according to the second embodiment, described above, has been further improved. Fig. 6 is a block diagram showing the structure of the portable terminal 100". Fig. 11 is a flowchart showing the operation of the portable terminal 100" in an authentication state. As shown in Fig. 6, the portable terminal 100" of the present embodiment includes a pressure sensor array 105, a mode acquisition part 110, a trigger monitoring part 115, a gripping-feature sample acquisition part 120, a switch 125, a temporary sample storage 130', a template learning part 135', an authentication performance checking part 140, a template storage 155, a user authentication part 160, an other-person score adder 170, a locking determination part 175 and a locking part 180. Since the operation of each part other than the other-person score adder 170 and the locking determination part 175 is exactly the same as that of the part having the same reference numeral in the second embodiment, a description thereof is omitted.

In the second embodiment, if the user authentication by the user authentication part 160 fails (No in S165), the locking part 180 immediately locks some or all of the functions of the portable terminal 100' (S 180), whereas, in the third embodiment, the portable terminal 100" is not immediately locked when user authentication fails just once, which is different from the second embodiment. More specifically, if the user authentication by the user authentication part 160 fails, the other-person score adder 170 adds a score $\beta$ to the other-person score (Oth, it is assumed that the initial value thereof is 0) (S 170). The score $\beta$ to be added is a value equal to or greater than 1 and can be appropriately adjusted such that the authentication operation is optimum. The larger the score $\beta$ to be added at a time, the shorter the period of time until the terminal is locked. The locking determination part 175 determines that the user authentication failed if the other-person score (Oth) has exceeded a predetermined threshold (an other-person determination line, Thi) (Yes in S175). If the other-person score (Oth) has not exceeded the predetermined threshold (the other-person determination line, Thi), the locking determination part 175 does not determine that the user authentication failed (No in S 175), and the processing returns to step S110. If the locking determination part 175 has determined that the user authentication failed (Yes in S 175), the locking part 180 locks some or all of the functions of the portable terminal 100" (S 180).

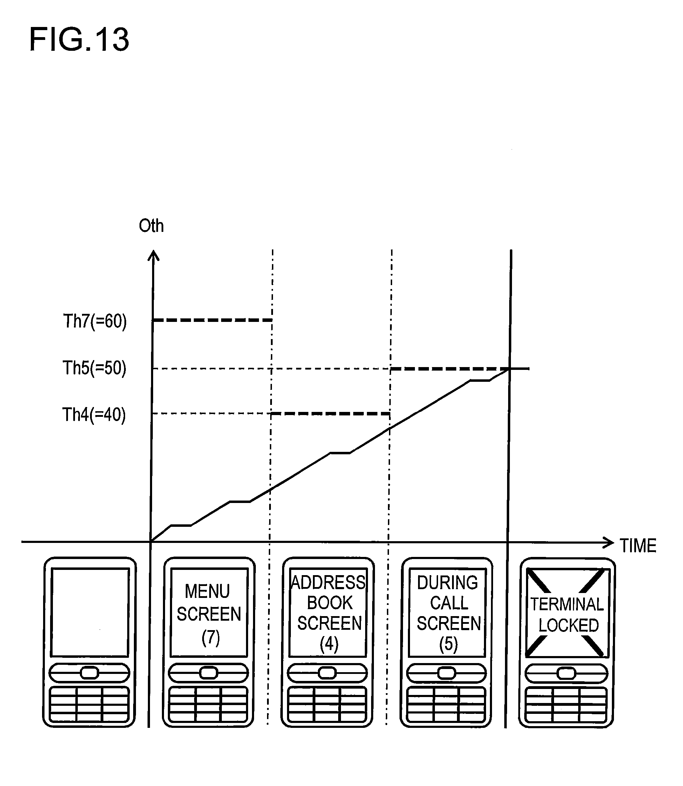

The operations of the other-person score adder 170 and the locking determination part 175, described above, will be described in more detail with reference to Fig. 13. Fig. 13 illustrates the operations of the other-person score adder 170 and the locking determination part 175 in the portable terminal 100" of the present embodiment. A graph in Fig. 13 shows how the other-person score (Oth) accumulates over time, where the horizontal axis indicates time, and the vertical axis indicates the other-person score (Oth). This graph is generated assuming that a third party, who is not the authorized user of the portable terminal 100", operates the portable terminal 100", opens the menu screen of the portable terminal 100", browses the address book, and makes a phone call. It is also assumed that the threshold (the other-person determination line, Thi) differs depending on the mode i (i = 1, ..., n). For example, if it is assumed that a malicious third party operates the portable terminal 100", the level of emergency for locking the terminal differs between when the third party operates the menu screen and when the third party browses personal information such as the address book. Therefore, when a threshold (other-person determination line, Th7) is set to 60 for the menu mode and a threshold (other-person determination line, Th4) is set to 40 for the personal information browsing mode, for example, the necessity for locking the portable terminal 100" can be different. In this case, the third party who operates the portable terminal 100" generates the sampling trigger several times unconsciously on the menu screen. As described earlier, a sampling trigger in the menu mode is "menu screen being displayed $\cap$ pressing OK key". A gripping-feature sample acquired at that time is used to perform user authentication. Every time user authentication fails, the other-person score (Oth) is added.

The threshold for the menu mode (the other-person determination line, Th7) is 60, the other-person score (Oth) does not exceed Th7 in the menu mode, and the menu screen is changed to the address book screen. Also in this address book screen, the third party generates a sampling trigger several times unconsciously. Therefore, every time user authentication fails, the other-person score (Oth) is added. The threshold for the personal information browsing mode (the other-person determination line, Th4) is as low as 40. Also in this mode, the other-person score (Oth) does not exceed Th4, and the address book screen is changed to the making calls screen.

As described earlier, a sampling trigger in the calling mode is generated once every five minutes. Therefore, a gripping-feature sample is automatically acquired once every five minutes while the third party is making a call. Therefore, every time user authentication fails, the other-person score (Oth) is added. The other-person score (Oth) accumulated in the menu mode, in the personal information browsing mode, and in the calling mode exceeds the threshold (Th5 = 50) for the calling mode, and the portable terminal 100" is locked at that time. When the terminal is locked, all the functions of the terminal may be locked, or only the mode in which the other-person score exceeded the threshold may be locked. In the case shown in Fig. 13, the other-person score (Oth) exceeds 50. As shown by the other-person determination lines (thresholds) for each mode in Fig. 14, since the other-person score (Oth) exceeds the threshold (other-person determination line) in each of the browser 1 mode, the browser 2 mode, the email mode, the personal information browsing mode, and the calling mode, only the browser function, the email function, the personal information browsing function, and making calls function may be locked.

As described above, since the threshold for locking the terminal can be lowered by using the accumulated other-person score to lock the terminal, even if the authorized user operates the portable terminal 100" with a gripping state accidentally different from the usual gripping state, the portable terminal 100" is not immediately locked, improving the convenience for the user. In addition, the threshold (other-person determination line) can be made different in different modes, so that different operations are provided in a mode in which the terminal should be locked immediately against the operation of a malicious third party and in a mode in which such locking is not necessary. Since the operation of the portable terminal 100" in the present embodiment in the learning state is exactly the same as that of the portable terminal 100' in the second embodiment, a description thereof is omitted.

[Fourth embodiment]

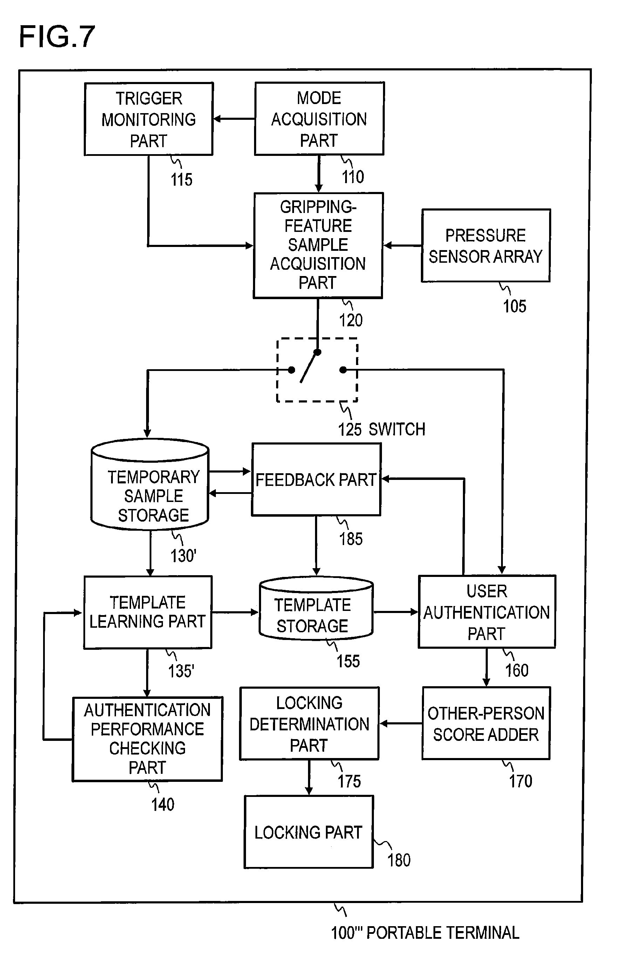

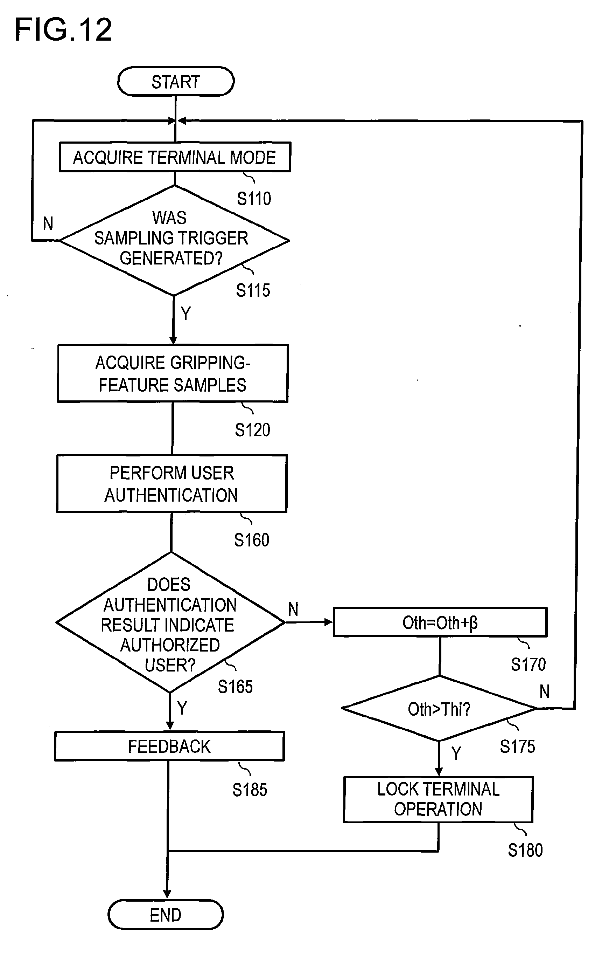

A portable terminal 100'" according to a third embodiment, which is an example terminal in which the authentication function of the portable terminal 100" according to the third embodiment, described above, has been further improved, will be described in detail with reference to Fig. 7 and Fig. 12. Fig. 7 is a block diagram showing the structure of the portable terminal 100'". Fig. 12 is a flowchart showing the operation of the portable terminal 100'" in an authentication state. As shown in Fig. 7, the portable terminal 100'" of the present embodiment includes a pressure sensor array 105, a mode acquisition part 110, a trigger monitoring part 115, a gripping-feature sample acquisition part 120, a switch 125, a temporary sample storage 130', a template learning part 135', an authentication performance checking part 140, a template storage 155, a user authentication part 160, an other-person score adder 170, a locking determination part 175, a locking part 180 and a feedback part 185. Since the operation of each part other than the feedback part 185 is exactly the same as that of the part having the same reference numeral in the third embodiment, a description thereof is omitted.

Although in the third embodiment, no operation is performed (End) when the user authentication by the user authentication part 160 succeeds (Yes in S165), the present embodiment differs from the third embodiment with respect to the operations performed in this case. More specifically, when the user authentication by the user authentication part 160 succeeds (Yes in S165), the gripping-feature samples used to learn the user authentication template and the gripping-feature sample used to perform the user authentication are used to correct the user authentication template by feedback (S185). More specifically, when the user authentication by the user authentication part 160 succeeds (Yes in step S165), the gripping-feature sample used in the user authentication is stored temporarily in the feedback part 185. Then, the feedback part 185 acquires all the gripping-feature samples (samples for learning) used to generate the user authentication template from the temporary sample storage 130'. The feedback part 185 uses the gripping-feature sample used to perform the user authentication and all the gripping-feature samples (samples for learning) used to generate the user authentication template to newly generate a user authentication template (feedback correction).

The new user authentication template generated in this way is stored in the template storage 155 (S185). The gripping-feature sample used to perform the user authentication is stored in the temporary sample storage 130' for the next feedback correction. As described above, the gripping-feature sample used when user authentication succeeds is used for feedback correction to generate a more precise user authentication template. Since the operation of the portable terminal 100'" in the present embodiment in the learning state is exactly the same as that of the portable terminal 100' in the second embodiment, a description thereof is omitted.

In the descriptions of the embodiments, the first embodiment was used as a basic frame; the second embodiment was made by adding the authentication performance checking part 140 thereto; the third embodiment was made by adding the other-person score adder 170 and the locking determination part 175 to the second embodiment; and the fourth embodiment was made by adding the feedback part 185 to the third embodiment, but the combination is not limited to those described above. It is possible to add only the other-person score adder 170 and the locking determination part 175 to the first embodiment. It is possible to add only the feedback part 185 to the first embodiment. It is possible to add only the other-person score adder 170, the locking determination part 175, and the feedback part 185 to the first embodiment. It is possible to add only the feedback part 185 to the second embodiment.

Each type of processing described above may be executed not only time sequentially according to the order in the description but also in parallel or individually when necessary or according to the processing capability of each apparatus that executes the processing. Appropriate changes can be made to the present invention without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium can be any type of medium, such as a magnetic recording device, an optical disc, a magneto-optical recording medium, or a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated correspondingly as a program (something that is not a direct instruction to the computer but is data or the like that has characteristics that determine the processing executed by the computer).

In the description given above, each apparatus is implemented by executing the predetermined program on the computer, but at least a part of the processing may be implemented by hardware.

**Claims**

1. A mobile information terminal that acquires gripping-feature samples when being gripped and that performs user authentication, the terminal comprising:

   a mode acquisition part configured to acquire a mode of the mobile information terminal;
   a trigger monitoring part configured to output a gripping-feature acquisition signal when a sampling trigger determined depending on the mode is generated;
   a gripping-feature sample acquisition part configured to acquire the gripping-feature acquisition signal and acquire a gripping-feature sample;
   a switch configured to switch the mobile information terminal between a learning state and an authentication state;
   a template learning part configured to learn a user authentication template in each of the modes by using the gripping-feature samples, when the mobile information terminal is in the learning state;
   a user authentication part configured to compare the learned user authentication template with the gripping-feature sample to perform the user authentication, when the mobile information terminal is in the authentication state; and
   a locking part configured to lock some or all functions of the mobile information terminal when the user authentication fails.

2. The mobile information terminal according to Claim 1, further comprising:

   an authentication performance checking part that is configured to check, when the mobile information terminal is in the learning state, an authentication performance of a user authentication template that is learned by the template learning part.

3. The mobile information terminal according to Claim 1 or 2, further comprising:

   an other-person score adder configured to add an other-person score when the mobile information terminal is in the authentication state and the result of the user authentication performed by the user authentication part indicates an unauthorized user of the mobile information terminal; and

a locking determination part configured to determine that the user authentication fails when the other-person score exceeds a predetermined threshold.

4. The mobile information terminal according to one of Claims 1 to 3, further comprising

a feedback part configured to use, when the mobile information terminal is in the authentication state and the result of the user authentication performed by the user authentication part indicates the authorized user of the mobile information terminal, the gripping-feature samples used to learn the user authentication template and the gripping-feature sample used in the user authentication to apply feedback correction to the user authentication template.

5. A gripping-feature learning method for acquiring gripping-feature samples when a mobile information terminal is gripped and for learning a user authentication template, the gripping-feature learning method comprising:

a mode acquisition step of acquiring a mode of the mobile information terminal;

a trigger monitoring step of outputting a gripping-feature acquisition signal when a sampling trigger determined depending on the mode is generated;

a gripping-feature sample acquisition step of acquiring the gripping-feature acquisition signal and acquiring a gripping-feature sample; and

a template learning step of learning a user authentication template in each of the modes by using the gripping-feature samples.

6. The gripping-feature learning method according to Claim 5, further comprising:

an authentication performance checking step of checking an authentication performance of a user authentication template that is learned in the template learning step.

7. A gripping-feature authentication method that uses a gripping-feature learning method according to Claim 5 or 6, comprising:

a mode acquisition step of acquiring a mode of the mobile information terminal;

a trigger monitoring step of outputting a gripping-feature acquisition signal when a sampling trigger determined depending on the mode is generated;

a gripping-feature sample acquisition step of acquiring the gripping-feature acquisition signal and acquiring a gripping-feature sample;

a user authentication step of comparing the learned user authentication template with the gripping-feature sample for each mode to perform the user authentication; and

a locking step of locking some or all functions of the mobile information terminal when the user authentication fails.

8. The gripping-feature authentication method according to Claim 7, further comprising:

an other-person score adding step of adding an other-person score when a result of the user authentication performed in the user authentication step indicates an unauthorized user of the mobile information terminal; and

a locking determination step of determining that the user authentication fails when the other-person score exceeds a predetermined threshold.

9. The gripping-feature authentication method according to Claim 7 or 8, further comprising:

a feedback step of, when a result of the user authentication performed in the user authentication step indicates an authorized user of the mobile information terminal, using the gripping-feature samples used to learn the user authentication template and the gripping-feature sample used in the user authentication to apply feedback correction to the user authentication template.

10. A computer-readable recording medium having recorded thereon a program for executing the method according to one of Claims 5 to 9.

# FIG.1

16 LIQUID CRYSTAL DISPLAY

11 KEY ARRANGED FACE

LEFT SIDE FACE 12

15 BOTTOM FACE

100 PORTABLE TERMINAL
(100')
(100")
(100''')

FIG.2

MEASUREMENT RESULT
OF GRIPPING-PRESSURE
DISTRIBUTION ON FACE 12

MEASUREMENT RESULT
OF GRIPPING-PRESSURE
DISTRIBUTION ON FACE 13

MEASUREMENT RESULT
OF GRIPPING-PRESSURE
DISTRIBUTION ON FACE 14

FIG.3A

2/21
thu 16:40

HABITS OF XXXX WILL
BE MEMORIZED.
PREVENT OTHER
PERSONS FROM USING
THIS TERMINAL DURING
LEARNING PERIOD

16

16-2
NOTIFICATION

16-1
AGENT

FIG.3B

3/1
fri 08:15

HABITS OF XXXX HAVE
BEEN MEMORIZED.
FROM NOW ON, YOU
CAN AUTHENTICATE
YOURSELF JUST BY
GRIPPING THIS
TERMINAL.

16

16-3
NOTIFICATION

16-1
AGENT

# FIG.4

100 PORTABLE TERMINAL

# FIG.5

100' PORTABLE TERMINAL

# FIG.6

```
┌──────────────────┐        ┌──────────────────┐
│     TRIGGER      │        │      MODE        │
│   MONITORING     │◄───────│  ACQUISITION     │
│      PART        │        │      PART        │
└──────────────────┘        └──────────────────┘
         115                        110

                            ┌──────────────────┐        ┌──────────────────┐
                            │    GRIPPING-     │        │                  │
                            │     FEATURE      │        │    PRESSURE      │
                            │     SAMPLE       │◄───────│  SENSOR ARRAY    │
                            │   ACQUISITION    │        │                  │
                            │      PART        │        └──────────────────┘
                            └──────────────────┘                105
                                    120

    ┌──────────────────┐                  125 SWITCH
    │    TEMPORARY     │◄───────────o  o──────┐
    │     SAMPLE       │                      │
    │     STORAGE      │                      │
    └──────────────────┘                      │
            130'                              │

    ┌──────────────────┐   ┌──────────────┐   ┌──────────────────┐
    │     TEMPLATE     │──►│   TEMPLATE   │──►│      USER        │
    │  LEARNING PART   │   │   STORAGE    │   │  AUTHENTICATION  │
    └──────────────────┘   └──────────────┘   │      PART        │
            135'                 155          └──────────────────┘
                                                      160
    ┌──────────────────┐   ┌──────────────┐   ┌──────────────────┐
    │   AUTHENTCATION  │   │    LOCKING   │   │  OTHER-PERSON    │
    │   PERFORMANCE    │   │ DETERMINATION│◄──│  SCORE ADDER     │
    │  CHECKING PART   │   │     PART     │   └──────────────────┘
    └──────────────────┘   └──────────────┘          170
            140                  175
                            ┌──────────────┐
                            │ LOCKING PART │
                            └──────────────┘
                                  180
```

100" PORTABLE TERMINAL

# FIG.7

```
TRIGGER               MODE
MONITORING  ◄──  ACQUISITION
PART                  PART
   ⌇115                 ⌇110

          GRIPPING-
          FEATURE         PRESSURE
          SAMPLE    ◄──  SENSOR ARRAY
          ACQUISITION
          PART                ⌇105
             ⌇120

              ╎ 125 SWITCH

TEMPORARY  ──►  FEEDBACK PART  ◄──
SAMPLE
STORAGE    ◄──              ⌇185
   ⌇130'

TEMPLATE    ──►  TEMPLATE   ──►  USER
LEARNING PART    STORAGE         AUTHENTICATION
                                 PART
   ⌇135'            ⌇155            ⌇160

AUTHENTICATION   LOCKING          OTHER-PERSON
PERFORMANCE      DETERMINATION ◄─ SCORE ADDER
CHECKING         PART
PART                ⌇175            ⌇170
   ⌇140

                 LOCKING PART
                       ⌇180
```

100''' PORTABLE TERMINAL

# FIG.8

START

ACQUIRE TERMINAL MODE
S110

WAS SAMPLING TRIGGER GENERATED?
S115

N

Y

ACQUIRE GRIPPING-FEATURE SAMPLES
S120

$Smi \geqq SFmi$?
(i=1 to n)
S130

N

Y

LEARN USER AUTHENTICATION TEMPLATE
S135

END

# FIG.9

```
                    ┌──────────┐
                    │  START   │
                    └────┬─────┘
                         │
         ┌───────────────┼───────────────────────┐
         │    ┌──────────▼──────────┐             │
         │    │ ACQUIRE TERMINAL MODE│            │
         │    └──────────┬──────────┘   S110      │
         │               │                        │
         │          ╱────▼────╲                   │
       N │        ╱   WAS        ╲                 │
      ◄──┤      ╱ SAMPLING TRIGGER ╲               │
         │      ╲   GENERATED?    ╱                │
         │        ╲──────┬──────╱     S115         │
         │               │ Y                       │
         │    ┌──────────▼──────────┐              │
         │    │  ACQUIRE GRIPPING-  │              │
         │    │   FEATURE SAMPLES   │              │
         │    └──────────┬──────────┘   S120       │
         │               │                         │
         │          ╱────▼────╲       N            │
         │        ╱ Smi .> SFmi ? ╲────────────────┤
         │        ╲  (i=1 to n)  ╱                 │
         │          ╲────┬──────╱     S130'        │
         │               │ Y                        │
         │    ┌──────────▼──────────┐              │
         │    │    LERARN USER      │              │
         │    │   AUTHENTICATION    │              │
         │    │     TEMPLATE        │              │
         │    └──────────┬──────────┘   S135'      │
         │               │                          │
         │    ┌──────────▼──────────┐              │
         │    │  CHECK AUTHENTICATION│             │
         │    │     PERFORMANCE     │              │
         │    └──────────┬──────────┘   S140       │
         │               │                          │
         │          ╱────▼────╲                    │
         │        ╱     IS      ╲    N   ┌──────────────┐
         │      ╱ AUTHENTICATION  ╲──────► SFmi=SFmi+ α │
         │      ╲  PERFORMANCE   ╱       └──────────────┘
         │        ╲ SATISFIED?  ╱            S150
         │          ╲────┬──────╱   S145
         │               │ Y
         │          ┌────▼─────┐
         │          │   END    │
         │          └──────────┘
```

$Smi .> SFmi ?$
$(i=1 \text{ to } n)$

$SFmi=SFmi+ \alpha$

# FIG.10

```
            START
              │
   ┌──────────▼──────────────┐
   │  ACQUIRE TERMINAL MODE  │
   └──────────┬──────────────┘
              │  S110
              ▼
        ╱─────────────╲
   N   ╱     WAS       ╲
◄─────╱ SAMPLING TRIGGER╲
      ╲   GENERATED?    ╱
       ╲───────────────╱  S115
              │Y
              ▼
   ┌──────────────────────┐
   │  ACQUIRE GRIPPING-   │
   │   FEATURE SAMPLES    │
   └──────────┬───────────┘
              │  S120
   ┌──────────▼───────────┐
   │ PERFORM AUTHENTICATION│
   └──────────┬───────────┘
              │  S160
              ▼
        ╱──────────────╲
   Y   ╱     DOES        ╲
◄─────╱  AUTHENTICATION   ╲
      ╲  RESULT INDICATE  ╱
       ╲   AUTHORIZED    ╱
        ╲    USER?      ╱  S165
              │N
              ▼
   ┌──────────────────────┐
   │    LOCK TERMINAL     │
   │     OPERATION        │
   └──────────┬───────────┘
              │  S180
              ▼
            END
```

# FIG.11

START

ACQUIRE TERMINAL MODE
S110

WAS SAMPLING TRIGGER GENERATED?
S115

N

Y

ACQUIRE GRIPPING-FEATURE SAMPLES
S120

PERFORM USER AUTHENTICATION
S160

DOES AUTHENTICATION RESULT INDICATE AUTHORIZED USER?
S165

N

$Oth=Oth+\beta$
S170

$Oth>Thi?$
S175

N

Y

LOCK TERMINAL OPERATION
S180

Y

END

# FIG.12

```
                    START

         ┌──────────────────────────┐
         │  ACQUIRE TERMINAL MODE    │
         └──────────────────────────┘
                                S110
                  WAS
      N        SAMPLING TRIGGER
          ◇   GENERATED?   ◇
                                S115
                      Y
         ┌──────────────────────────┐
         │   ACQUIRE GRIPPING-       │
         │   FEATURE SAMPLES         │
         └──────────────────────────┘
                                S120
         ┌──────────────────────────┐
         │   PERFORM USER            │
         │   AUTHENTICATION          │
         └──────────────────────────┘
                                S160
                 DOES
            AUTHENTICATION
            RESULT INDICATE   N      ┌──────────────────────┐
            AUTHORIZED     ─────────→│   Oth=Oth+β          │
              USER?                  └──────────────────────┘
                     S165                               S170
                      Y                                          N
         ┌──────────────────────┐         ◇  Oth>Thi?  ◇
         │      FEEDBACK         │
         └──────────────────────┘                          S175
                           S185              Y
                                   ┌──────────────────────┐
                                   │   LOCK TERMINAL       │
                                   │   OPERATION           │
                                   └──────────────────────┘
                                                       S180
                    END
```

# FIG.13

Oth

Th7(=60)

Th5(=50)

Th4(=40)

TIME

MENU
SCREEN
(7)

ADDRESS
BOOK
SCREEN
(4)

DURING
CALL
SCREEN
(5)

TERMINAL
LOCKED

# FIG.14

| No. | MODE NAME | TERMINAL STATE | SAMPLING TRIGGER | BOUNDARY VALUE | OTH-PERSON DETERM LINE |
|---|---|---|---|---|---|
| 1 | BROWSER 1 | BROWSING etc. BEING CHARGED WITH COMMUNICATION FEE | BROWSER IN OPERATION ∩ PRESSING OK KEY | 70 | 50 |
| 2 | BROWSER 2 | IT IS HIGHLY POSSIBLE THAT CONTENT FEE OR OTHER FEES ARE CHARGED | BROWSER IN OPERATION ∩ PRESSING OK KEY | 60 | 40 |
| 3 | EMAIL | PERSONAL INFORMATION MAY BE BROWSED | MAILER IN OPERATION ∩ PRESSING OK KEY | 55 | 40 |
| 4 | PERSONAL INFORMATION BROWSING | BROWSING PERSONAL INFORMATION SUCH AS IN ADDRESS BOOK | PERSONAL INFORMATION BEING DISPLAYED ∩ PRESSING OK KEY | 90 | 40 |
| 5 | CALLING | COMMUNICATION FEE IS BEING CHARDED | ONCE EVERY FIVE MINUTES | 70 | 50 |
| 6 | APPLICATION | COMMUNICATION FEE IS BEING CHARGED & PERSONAL INFORMATION MAY BE BROWSED | ONCE EVERY FIVE MINUTES | 60 | 60 |
| 7 | MENU | PERSONAL INFORMATION MAY BE BROWSED | MENU SCREEN BEING DISPLAYED ∩ PRESSING OK KEY | 50 | 60 |
| ... | | ... | ... | | ... |

FIG.15

### ERROR RATE (BROWSER 1)

FIG.16

### ERROR RATE (BROWSER 2)

EP 2 669 834 A1

## FIG.17

**ERROR RATE (EMAIL)**

FRR
FAR
ERROR RATE (%)
DISCRIMINANT THRESHOLD

## FIG.18

**ERROR RATE (PERSONAL INFORMATION)**

FRR
FAR
ERROR RATE (%)
DISCRIMINANT THRESHOLD

30

# FIG.19

ERROR RATE (CALLING)

# FIG.20

ERROR RATE (APPLICATION)

EP 2 669 834 A1

## INTERNATIONAL SEARCH REPORT

| | International application No. |
|---|---|
| | PCT/JP2012/050709 |

**A. CLASSIFICATION OF SUBJECT MATTER**
*G06F21/20*(2006.01)i, *H04L9/32*(2006.01)i, *H04M1/00*(2006.01)i

According to International Patent Classification (IPC) or to both national classification and IPC

**B. FIELDS SEARCHED**

Minimum documentation searched (classification system followed by classification symbols)
G06F21/20, H04L9/32, H04M1/00

Documentation searched other than minimum documentation to the extent that such documents are included in the fields searched
Jitsuyo Shinan Koho 1922-1996 Jitsuyo Shinan Toroku Koho 1996-2012
Kokai Jitsuyo Shinan Koho 1971-2012 Toroku Jitsuyo Shinan Koho 1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-11591 A (Denso Corp.), 12 January 2006 (12.01.2006), claims 1, 4 (Family: none) | 1-10 |
| A | JP 2004-110196 A (Fuji Xerox Co., Ltd.), 08 April 2004 (08.04.2004), claim 1; paragraphs [0018] to [0021]; fig. 2 (Family: none) | 1-10 |
| A | JP 11-119906 A (Taisei Corp.), 30 April 1999 (30.04.1999), claims (Family: none) | 1-10 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 04 April, 2012 (04.04.12) | Date of mailing of the international search report 17 April, 2012 (17.04.12) |
|---|---|
| Name and mailing address of the ISA/ Japanese Patent Office | Authorized officer |
| Facsimile No. | Telephone No. |

Form PCT/ISA/210 (second sheet) (July 2009)

32

**EP 2 669 834 A1**

**Patent documents cited in the description**

- JP 2001142849 A